# EUROPÄISCHE PATENTSCHRIFT

(11) **EP 0 890 085 B1**
(45) Veröffentlichungstag und Bekanntmachung des Hinweises auf die Patenterteilung: **31.07.2002**
(21) Anmeldenummer: 97916421.7
(22) Anmeldetag: 01.04.1997
(51) Int. Cl.: G01J 3/453

(54) **FOURIER-SPEKTROMETER**
FOURIER SPECTROMETER
SPECTROMETRE A TRANSFORMATION DE FOURIER

(30) Priorität: 30.03.1996 DE 19612794
(43) Veröffentlichungstag der Anmeldung: 13.01.1999
(73) Patentinhaber: Overhamm, Michael, 65779 Kelkheim (DE)
(72) Erfinder: Overhamm, Michael, 65779 Kelkheim (DE)
(74) Vertreter: Fleck, Hermann-Josef, Dr.-Ing.
(86) Internationale Anmeldenummer: EP9701637
(87) Internationale Veröffentlichungsnummer: WO9737200

(56) Entgegenhaltungen:
- WO-A-85/03122
- US-A- 3 684 379
- APPLIED OPTICS, Bd. 34, Nr. 9, 20.März 1995, Seiten 1493-1501, XP000493740 MOLLER K D: "WAVE-FRONT-DIVIDING ARRAY INTERFEROMETERS WITHOUT MOVING PARTS FOR REAL-TIME SPECTROSCOPY FROM THE IR TO THE UV"
- IBM TECHNICAL DISCLOSURE BULLETIN, Bd. 22, Nr. 2, Juli 1979, NEW YORK, US, Seiten 701-702, XP002034619 ANONYMOUS: "Multiple Beam Interferometer. July 1979."

## Beschreibung

Die Erfindung betrifft ein Fourier-Spektrometer gemäß dem Oberbegriff des Anspruches 1.

Ein Spektrometer dieser Art ist in der WO 85/03122 angegeben. Bei diesem bekannten Spetrometer sind ein Strahlteiler, ein erster und zweiter Spiegel und ein Auswertesystem einschließlich eines photoelektrischen Wandlers in Form einer Photodiodenanordnung vorgesehen. Beide Spiegel sind ortsfest zu dem Strahlteiler angeordnet, wobei ein Spiegel um einen Winkel bezüglich der zugehörigen optischen Hauptachse gekippt ist. Mit diesem Aufbau soll ein Interferometer bereitgestellt werden, mit dem ein bewegliches Abtastelement vermieden wird.

Die Druckschrift IBM Technical Disclosure Bulletin Vol. 22, No. 2, July 1979, New York, U.S. pages 701 and 702, XP002034619, Anonymous: "Multiple Beam Interferometer" zeigt eine interferometrische Anordnung, die bezüglich der beiden zugeordneten Strahlengänge (zuerst reflektierter Strahl und zuerst transmittierter Strahl) angeordnete Stufenspiegel aufweist, wobei die Spiegelflächen beider Stufenspiegel senkrecht zu den beiden Hauptachsen der zugeordneten Strahlen ausgerichtet sind, so dass die Strahlen auch wieder in die gleiche Richtung zurück reflektiert werden. Ein senkrechter Spiegel in Kombination mit einem gekippten Spiegel ist nicht gezeigt.

Zu Fourier-Spektrometern wird ferner in dem "Lehrbuch der Experimentalphysik" Band III Optik, Bergmann/Schaefer unter Hinweis auf die Fourier-Spektroskopie ausgeführt, dass ein Spiegel des Interferometers durch einen Präzisionsantrieb verschoben wird. Die Bewegung des Spiegels wird zusammen mit den gemessenen Interferenzen in einem Rechner ausgewertet.

Wie schon in dem bekannten Lehrbuch ausgeführt wird, muss die Bewegung des Spiegels mit hoher Präzision erfolgen. Der Aufwand an Präzisionsmechanik - Elektronik und Optik - ist nicht unerheblich und erfordert genaue Justierarbeiten.

Es ist wünschenswert, ein Fourier-Spektrometer mit einem geringeren Aufwand an Präzisionsmechanik zu schaffen.

Daher ist es Aufgabe der Erfindung, ein Fourier-Spektrometer zu schaffen, das ohne mechanisch bewegte Teile auskommt und kostengünstig und robust aufgebaut ist.

Die Aufgabe der Erfindung wird durch die Merkmale des Anspruches 1 gelöst. Üblicherweise werden ebene Spiegel verwendet, die exakt im rechten Winkel zu den optischen Achsen liegen. Demgegenüber geht die Erfindung den Weg, einen der Spiegel um einen bestimmten Betrag aus der Ebene üblicher Anordnung heraus zu neigen. Außerdem ist ein Hohlspiegel vorgesehen, der ein Bild des Spiegels am Ort des als Detektorarray ausgebildeten Detektors erzeugt.

Erfindungsgemäß führt die Spiegelneigung zu der erwünschten Wirkung, dass ein statisches Fourier-Spektrometer geschaffen wird, das vollkommen ohne bewegte Teile auskommt. Die Spiegelneigung weist einen sehr kleinen Wert auf und kann im Bereich der Fertigungsfehler der Strahlteilerwürfel liegen. Bei üblichen Strahlteilerwürfeln wird ein Spiegel an einer Seite nur um 10 bis 300 µm angehoben. Mit dem Hohlspiegel wird die räumliche Kohärenz verbessert.

Ein weiterer Vorteil der Erfindung besteht darin, dass mit der Erfindung neue Wege in der Analyse elektromagnetischer Felder möglich sind. Dabei werden Untersuchungsmöglichkeiten über fast das gesamte elektromagnetische Spektrum eröffnet.

Nachfolgend wird die Erfindung anhand der Zeichnungen näher beschrieben. Es zeigen:
- Fig. 1: eine Prinzipskizze der Erfindung,
- Fig. 2: eine erste Ausführungsform der Erfindung,
- Fig. 3: eine zweite Ausführungsform der Erfindung mit Strahlteilertrapezoid,
- Fig. 4: eine Seitenansicht der Ausführungsform nach Fig. 3,
- Fig.: 5 eine weitere Ausführungsform mit in den Strahlteilerwürfel eingearbeiteten Stufenspiegeln und
- Fig.: 6 eine weitere Ausführungsform der Erfindung mit Hohlspiegel zur Verbesserung dre räumlichen Kohärenz.

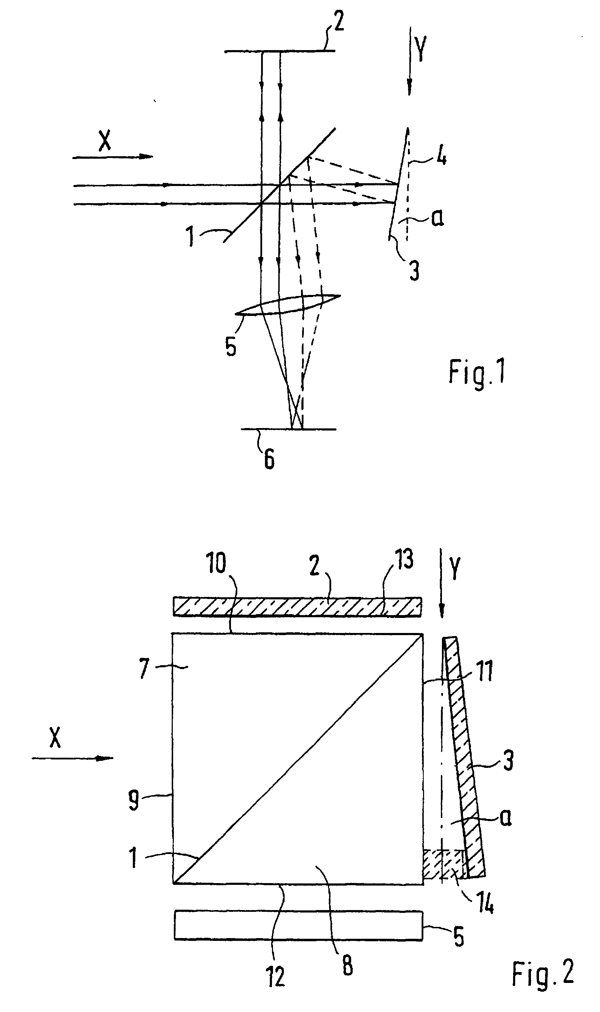

Fig. 1 zeigt einen um 45° geneigten Strahlteiler 1 eines Fourier-Spektrometers, dem aus Richtung der optischen Achse X Licht in bekannter Weise von einer Strahlenquelle (nicht gezeigt) zugeführt wird.

Weiter ist ein erster Spiegel 2 und ein zweiter Spiegel 3 vorgesehen. Spiegel 2 steht senkrecht zu der zweiten optischen Achse Y, die wiederum im rechten Winkel zu der Achse X verläuft. Wesentlich ist, daß einer der beiden Spiegel 2,3 um einen kleinen Winkel "a" aus seiner Lage senkrecht zu den Hauptachsen geneigt ist. In Fig. 1 ist Spiegel 3 um eine gedachte Schwenkachse aus der Ebene 4 verschwenkt. Die Schwenkachse steht senkrecht auf den achsen X, Y und verläuft parallel zu der Ebene des Strahlteilers 1. Der Winkel "a" liegt je nach kürzester Wellenlänge und Detektorarray in einem Bereich von z.B. 0,05 bis 5°. Berechnungen für sichtbares Licht und Standard-Detektorarrays haben Winkel "a" von z.B. 0,166° und 0,243° ergeben.

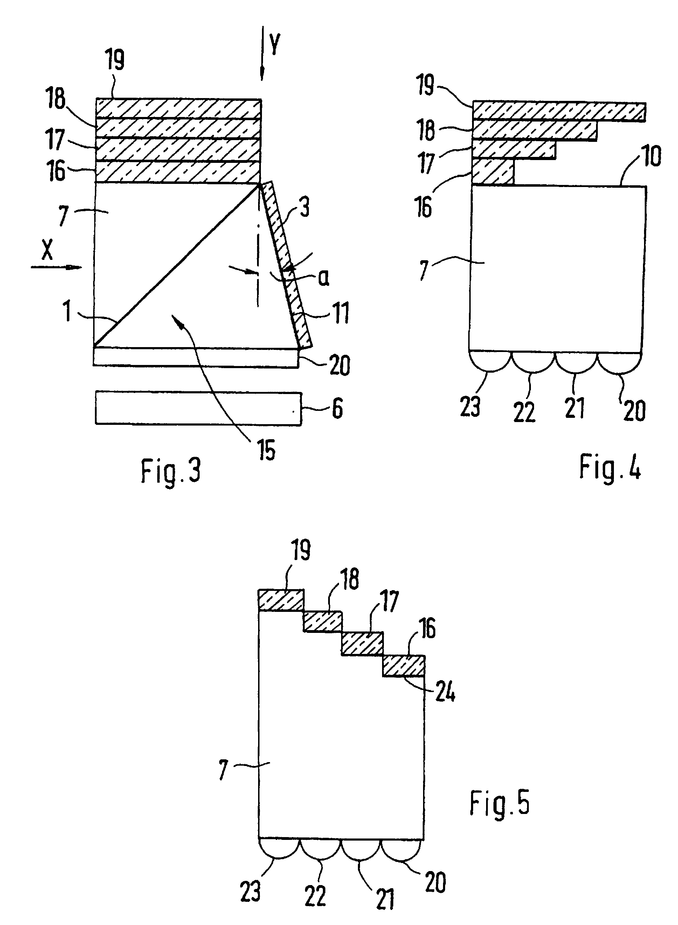

In Fig. 1 ist der Spiegel 3 bezogen auf die Achse Y mit Blick auf die Blattebene nach links geschwenkt. Aufgrund der Spiegelneigung kommt es zu den gezeigten Strahlengängen, die ein optisches Linsensystem 5 durchlaufen und anschließend auf einen Detektor 6 in Form eines linearen oder flächenhaften Detektorarrays treffen. Bei Anwendung eines flächenhaften Detektorarrays können die Zylinderlinsen 20, 21, 22 und 23 in den Fig. 3, 4, und 5 entfallen. Von jedem der Spiegel 16, 17, 18 und 19 werden dann mehrere Zeilen des Detektorarrays beleuchtet. Durch geeignete Auswertung der von jeweils einem Spiegel beleuchteten Zeilen kann eine Verbesserung des Signal/Rausch-Verhältnisses erzielt werden. Der phasenrichtige Anschluß überlappender Teilinterferogramme kann z.B. mit Hilfe der Autokorrelationsfunktion hergestellt werden.

Im Bereich des Detektors 6 kommt es zu einem Interferenzmuster, welches per digitaler Fourier-Transformation auf einem Computer in das entsprechende Spektrum umgewandelt wird.

Fig. 2 zeigt eine Ausführungsform, bei der ein erstes und zweites Prisma 7, 8 einen Strahlteilerwürfel bilden. Die Würfelflächen, die senkrecht bzw. parallel zu den Achsen X, Y stehen, sind mit 9, 10, 11 und 12 bezeichnet. Die in Fig. 2 gezeigten Maße entsprechen nicht den konkreten Verhältnissen und sind nur zum besseren Verständnis, wie gezeigt, dargestellt. Auch die Abstände der Spiegel 2, 3 mit den Spiegelschichten 13 (nur an Spiegel 2 bezeichnet) zu den Würfelflächen 10, 11 können entfallen. Folglich kann z.B. der Spiegel 2 direkt auf der Fläche 10 aufgedampft sein.

Weiter weicht Fig. 2 von Fig. 1 darin ab, daß der Spiegel 3 nunmehr nach rechts geschwenkt ist.

Der Kippwinkel, d.h. der Winkel "a", des Spiegels 3 kann durch ein Abstandselement 14 erzeugt werden. Hierzu ist das Abstandselement 14, das in Fig. 2 gestrichelt dargestellt ist, an einer Außenseite des Spiegels 2 bzw. einer Kante des Würfels angeordnet und dort befestigt. Die Spiegelseite, die dem Abstandselement 14 gegenüber liegt, liegt dann bevorzugt auf dem Würfel auf. Bei dem Abstandselement handelt es sich bevorzugt um eine Folie, z.B. mit dem Handelsnamen "Mylar" mit Dicken von beispielsweise 6 bis 250 µm.

Fig. 3 zeigt eine Ausführungsform, bei der das gleichschenklige rechtwinklige Prisma 8 (vgl. Fig. 2) durch ein schiefwinkliges Prisma ersetzt ist, so daß sich insgesamt ein Strahlteilertrapezoid 15 ergibt, dessen Fläche 11 die Spiegelfläche selbst bildet oder auf den der Spiegel 3 direkt aufgedampft ist. Die Neigung der Fläche 11 um den Winkel "a" kann je nach Anwendungsfall auch nach links geschwenkt sein (vgl. Fig. 1).

Während die Fig. 2 einen geneigten Spiegel 3 zeigt, handelt es sich in Fig. 3 um einen Keil, der direkt an dem Strahlteiler ausgebildet ist.

Weiter unterscheidet sich Fig. 3 von der Ausführungsform nach Fig. 2 darin, daß anstelle des Spiegels 2 ein abgestuftes Spiegelsystem vorgesehen ist, das aus den Spiegeln 16, 17, 18 und 19 besteht. Die Spiegel 16, 17, 18 und 19 sind parallel und hintereinander angeordnet.

Fig. 4 zeigt die Seitenansicht des Fourier-Spektrometers aus Fig. 3 in der um die Achse Y um 90° gedrehten Ansicht. In dieser Ansicht nach Fig. 4 sind treppenartige Abstufungen der Spiegel 16, 17, 18 und 19 erkennbar. Der Spiegel 19 mit der größten Breite besitzt den größten Abstand zu der Fläche 10. Der kürzeste Spiegel 16 liegt an der Fläche 10 direkt an. Auf diese abgestufte Weise behindern sich die Spiegel 16, 17, 18 und 19 nicht gegenseitig.

Den Spiegeln 16, 17, 18 und 19 stehen an der Würfelfläche 12 Zylinderlinsen 20, 21, 22 und 23 gegenüber. Die Zylinderlinsen 20, 21, 22 und 23 entsprechen der Linse 5 in den Fig. 1 und 2.

Fig. 5 zeigt gegenüber Fig. 4 eine Ausführungsform, bei der eine treppenartige Abstufung 24 direkt in den Strahlteilerwürfel eingearbeitet ist. Die Spiegel können wiederum direkt aufgedampft sein.

Die Anzahl der treppenartigen Abstufungen 24 bzw. Spiegel 16, 17, 18 und 19 ist nur beispielhaft gewählt und kann je nach Anwendungsfall das n-fache von einem Spiegel betragen.

Der Zweck der treppenartigen Anordnung besteht darin, daß ein etwa n-fach längeres Interferogramm und eine entsprechend erhöhte spektrale Auflösung nach der Fourier-Transformation erzielt wird.

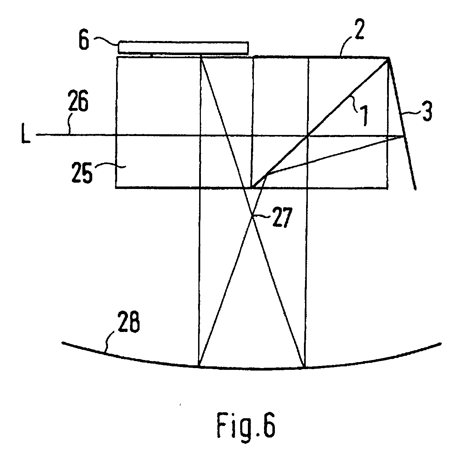

Fig. 6 zeigt eine Ausführungsform, bei der ein zylindrischer bzw. sphärischer Hohlspiegel 28 ein Bild von Spiegel 2 am Ort des Detektorarrays 6 erzeugt und dadurch die räumliche Kohärenz der vom Strahltiler 1 erzeugten Teilstrahlen verbessert und bei der die für verschiedene Wellenlängen unterschiedlichen Austrittswinkel aus dem den Strahlteiler 1 beinhaltenden Strahlteilerwürfel durch einen Kompensations-Glaswürfel 25 kompensiert werden.

## Patentansprüche

1. Fourier-Spektrometer mit einem Amplituden-Strahlteiler (1), einem ersten Spiegel (2), einem zweiten Spiegel (3) und einem ein Detektorarray (6) aufweisenden Auswertesystem, bei dem beide Spiegel (2, 3) ortsfest zu dem Strahlteiler (1) angeordnet sind, einer der Spiegel (2, 3) um einen bestimmten Winkel "a", bezogen auf die zugehörige optische Hauptachse, gekippt ist, und sich die gedachte Schwenkachse des verschwenkten Spiegels (2, 3) senkrecht zu den Achsen X, Y erstreckt,
**dadurch gekennzeichnet,**
**dass** ein Hohlspiegel (28) vorgesehen ist, der ein Bild des Spiegels (2) am Ort des als Detektorarray ausgebildeten Detektors (6) erzeugt.

2. Fourier-Spektrometer nach Anspruch 1,
**dadurch gekennzeichnet,**
**dass** das Kippen eines der Spiegel (2, 3) mittels eines Abstandselementes (14) erfolgt, das an der Seite des Spiegels (2, 3) angeordnet ist, die der gedachten Schwenkachse gegenüberliegt.

3. Fourier-Spektrometer nach Anspruch 2,
**dadurch gekennzeichnet,**
**dass** das Abstandselement (14) eine planparallele Folie, vorzugsweise eine Mylarfolie ist.

4. Fourier-Spektrometer nach Anspruch 1,
**dadurch gekennzeichnet,**
**dass** die Spiegelneigung mittels eines Keiles erfolgt.

5. Fourier-Spektrometer nach Anspruch 4,
**dadurch gekennzeichnet,**
**dass** der Keil einstückiger Bestandteil eines Strahlteilerwürfels ist.

6. Fourier-Spektrometer nach Anspruch 5,
**dadurch gekennzeichnet,**
**dass** der Keil an dem Strahlteilerwürfel angeschliffen ist.

7. Fourier-Spektrometer nach Anspruch 5 und 6,
**dadurch gekennzeichnet,**
**dass** der Strahlteilerwürfel ein Strahlteilertrapezoid bildet (15).

8. Fourier-Spektrometer nach einem der Ansprüche 1 bis 7,
**dadurch gekennzeichnet,**
**dass** an der Austrittsfläche (12) des Strahlteilerwürfels mehrere Zylinderlinsen (20,21, 22,23) angeordnet sind, die eng parallel nebeneinander in einer Ebene liegen und mit ihrer Längsachse senkrecht zu der Eintrittsfläche (9) des Strahlteilerwürfels stehen, und
**dass** den Zylinderlinsen (20,21, 22,23) auf der gegenüberliegenden Fläche (10) des Strahlteilerwürfels eine gleiche Anzahl von einzelnen Spiegeln (16,17, 18,19) zugeordnet sind, die treppenartig in unterschiedlichen Höhen, bezogen auf die Ebene der Zylinderlinsen (20,21, 22,23), angeordnet sind.

9. Fourier-Spektrometer nach Anspruch 8,
**dadurch gekennzeichnet,**
**dass** die Spiegel (16,17, 18,19) unterschiedliche Breiten aufweisen, dass die Breitenabstufungen den Abständen der nebeneinander liegenden Zylinderlinsen (20,21, 22,23) entsprechen,
**dass** die Spiegel (16,17, 18,19) mit einer Seite in einer gemeinsamen Ebene liegen, und
**dass** die Spiegel (16,17, 18,19) planparallel übereinander geschichtet sind.

10. Fourier-Spektrometer nach Anspruch 8,
**dadurch gekennzeichnet,**
**dass** in den Strahlteilerwürfel eine treppenartige Abstufung (24) eingearbeitet ist, die mit den Spiegeln (16,17, 18,19) belegt ist.

11. Fourier-Spektrometer nach einem der Ansprüche 1 bis 10,
**dadurch gekennzeichnet,**
**dass** die Spiegel (2,3, 16,17, 18,19) auf dem Strahlteilerwürfel direkt aufgedampft sind.

12. Fourier-Spektrometer nach einem der vorhergehenden Ansprüche,
**dadurch gekennzeichnet,**
**dass** ein Kompensations-Glaskörper (25) vorgesehen ist, durch den die für verschiedene Wellenlängen unterschiedlichen Austrittswinkel aus dem den Strahlteiler (1) beinhaltenden Strahlteilerwürfel kompensiert werden.

## Claims

1. Fourier spectrometer, having a first amplitude beam splitter (1), a first mirror (2), a second mirror (3) and an evaluating system which includes a detector array (6), wherein both mirrors (2, 3) are disposed in a stationary manner relative to the beam splitter (1), one of the mirrors (2, 3) is pivoted through a specific angle "a" relative to the associated optical main axis, and the imaginary pivotal axis of the pivoted mirror (2, 3) extends perpendicular to the axes X and Y, **characterised in that** a hollow mirror (28) is provided, which produces an image of the mirror (2) at the location of the detector (6) which is in the form of a detector array.

2. Fourier spectrometer according to claim 1, **characterised in that** the pivotal movement of one of the mirrors (2, 3) is effected by means of a spacer member (14) which is disposed on the side of the mirror (2, 3) situated opposite the imaginary pivotal axis.

3. Fourier spectrometer according to claim 2, **characterised in that** the spacer member (14) is a plane-parallel film, preferably a mylar film.

4. Fourier spectrometer according to claim 1, **characterised in that** the mirror inclination is effected by means of a wedge.

5. Fourier spectrometer according to claim 4, **characterised in that** the wedge is a one-piece constituent part of a beam splitter hexahedron.

6. Fourier spectrometer according to claim 5, **characterised in that** the wedge is ground on the beam splitter hexahedron.

7. Fourier spectrometer according to claims 5 and 6, **characterised in that** the beam splitter hexahedron forms a beam splitter trapezoid (15).

8. Fourier spectrometer according to one of claims 1 to 7, **characterised in that** a plurality of cylindrical lenses (20,21, 22,23) are disposed on the outlet face (12) of the beam splitter hexahedron, which lenses lie adjacent one another in one plane in a close and parallel manner and extend with their longitudinal axis perpendicular to the inlet face (9) of the beam splitter hexahedron, and **in that** the cylindrical lenses (20,21, 22,23) have associated therewith, on the oppositely situated face (10) of the beam splitter hexahedron, an identical number of individual mirrors (16,17, 18,19), which are disposed in a step-like manner at variable heights relative to the plane of the cylindrical lenses (20,21, 22,23).

9. Fourier spectrometer according to claim 8, **characterised in that** the mirrors (16,17, 18,19) have variable widths, **in that** the width graduations correspond to the spacings between the cylindrical lenses (20,21, 22,23) which lie adjacent one another, **in that** the mirrors (16,17, 18,19) lie with one side in a common plane, and **in that** the mirrors (16,17, 18,19) are arranged in layers in a plane-parallel manner one above the other.

10. Fourier spectrometer according to claim 8, **characterised in that** a step-like graduated portion (24), which is covered with the mirrors (16,17, 18,19), is incorporated in the beam splitter hexahedron.

11. Fourier spectrometer according to one of claims 1 to 10, **characterised in that** the mirrors (2,3, 16,17, 18,19) are directly vapour-deposited on the beam splitter hexahedron.

12. Fourier spectrometer according to one of the preceding claims, **characterised in that** a compensating glass body (25) is provided, by means of which the discharge angles from the beam splitter hexahedron, which includes the beam splitter (1), are compensated-for, said angles varying for different wavelengths.

## Revendications

1. Spectromètre Fourier avec un fractionneur de faisceau (1) d'amplitudes, un premier miroir (2), un second miroir (3) et un système d'exploitation présentant un réseau détecteur (6), dans lequel les deux miroirs (2, 3) sont disposés fixes par rapport au fractionneur de faisceau (1), l'un des miroirs (2, 3) est incliné d'un angle « a » déterminé par rapport à l'axe optique principal adjoint et l'axe de pivotement imaginaire du miroir (2, 3) tourné s'étend orthogonalement aux axes X, Y,
**caractérisé en ce**
**qu'**est prévu un miroir concave (28) qui engendre une image du miroir (2) à l'emplacement du détecteur (6) réalisé sous forme de réseau détecteur.

2. Spectromètre Fourier selon la revendication 1,
**caractérisé en ce**
**que** l'inclinaison de l'un des miroirs (2, 3) est effectuée au moyen d'un élément d'écartement (14) qui est disposé du côté du miroir (2, 3) qui est en regard de l'axe de pivotement imaginaire.

3. Spectromètre Fourier selon la revendication 2,
**caractérisé en ce**
**que** l'élément d'écartement (14) est une feuille à faces planes parallèles, de préférence une feuille de mylar.

4. Spectromètre Fourier selon la revendication 1,
**caractérisé en ce**
**que** l'inclinaison du miroir est effectuée au moyen d'un coin.

5. Spectromètre Fourier selon la revendication 4,
**caractérisé en ce**
**que** le coin est un composant monobloc d'un cube fractionneur de faisceau.

6. Spectromètre Fourier selon la revendication 5,
**caractérisé en ce**
**que** le coin est coupé sur le cube fractionneur de faisceau.

7. Spectromètre Fourier selon la revendication 5 et 6,
**caractérisé en ce**
**que** le cube fractionneur de faisceau forme un trapézoïde fractionneur de faisceau (15).

8. Spectromètre Fourier selon l'une des revendications 1 à 7,
**caractérisé en ce**
**que**, à la surface de sortie (12) du cube fractionneur de faisceau, sont disposées plusieurs lentilles cylindriques (20, 21, 22, 23) qui se trouvent parallèles étroitement côte à côte dans un plan et sont orthogonales, par leur axe longitudinal, à la surface d'entrée (9) du cube fractionneur de faisceau et qu'aux lentilles cylindriques (20, 21, 22, 23) sont adjoints, sur la surface (10) opposée du cube fractionneur de faisceau, un nombre égal de miroirs (16, 17, 18, 19) individuels qui sont disposés en marches d'escalier à des hauteurs différentes par rapport au plan des lentilles cylindriques (20, 21, 22, 23).

9. Spectromètre Fourier selon la revendication 8,
**caractérisé en ce**
**que** les miroirs (16, 17, 18, 19) présentent des largeurs différentes,
**que** les échelonnements de largeur correspondent aux écartements des lentilles cylindriques (20, 21, 22, 23) disposées côte à côte,
**que** les miroirs (16, 17, 18, 19) sont dans un plan commun par une face et
**que** les miroirs (16, 17, 18, 19) sont disposés par couches les uns sur les autres à faces planes parallèles.

10. Spectromètre Fourier selon la revendication 8,
**caractérisé en ce**
**qu'**un échelonnement (24) en marches d'escalier est creusé dans le cube fractionneur de faisceau, qui est garni par les miroirs (16, 17, 18, 19).

11. Spectromètre Fourier selon l'une des revendications 1 à 10,
**caractérisé en ce**
**que** les miroirs (2, 3, 16, 17, 18, 19) sont métallisés sous vide directement sur le cube fractionneur de faisceau.

12. Spectromètre Fourier selon l'une des revendications précédentes,
**caractérisé en ce**
**qu'**est prévu un corps de compensation en verre (25) par lequel sont compensés les angles de sortie, hors du cube fractionneur de faisceau contenant le fractionneur de faisceau (1), différents pour différentes longueurs d'onde.
